# EUROPEAN PATENT APPLICATION

(11) **EP 0 629 096 A2**
(43) Date of publication of application: **14.12.1994**
(21) Application number: 94103492.8
(22) Date of filing: 08.03.1994
(51) Int. Cl.: H04Q 7/04, H04L 12/28, H04L 12/56

(54) **Improvements in or relating to cellular mobile radio systems**

(30) Priority: 10.06.1993 GB 9312003
(71) Applicant: ROKE MANOR RESEARCH LIMITED, Romsey, Hampshire, SO51 0ZN (GB)
(72) Inventor: DeVille, Jonathan Mark, Bournemouth, Dorset BH1 4DR (GB)
(74) Representative: Allen, Derek

(57) **Abstract**

A radio system which is arranged to operate in accordance with a packet reservation multiple access protocol, wherein at least one time slot in each frame is designated for the transmission of access contention data, which time slot includes a first field reserved for data specifying the number of information slots required by a sub-unit, and which system includes a base station adapted for operation such that consequent upon receipt of data in the said reserved field, the base station is arranged to respond by allocating available slots to satisfy the requirement of the sub-unit, characterised in that the said designated time slot is arranged additionally to include a further field reserved for a flag which when it is present, indicates to the base station that the sub-unit requires the substantially permanent allocation of the said information slots.

## Description

This invention relates to cellular mobile radio systems and more especially, although not exclusively, it relates to an improvement in or modification of a cellular mobile radio system arranged to operate in accordance with the packet reservation multiple access protocol which forms the subject of our co-pending GB Patent Application No 9219824.1. Although the invention is primarily intended for incorporation in digital cellular mobile radio communication systems, it may also find application in wireless local area networks.

According to our co-pending patent application, a cellular mobile radio system is provided which is arranged to operate in accordance with a packet reservation multiple access protocol, wherein at least one time slot in each frame is designated for the transmission of access contention data which time slot includes a field reserved for data specifying a number of information slots required by a mobile unit, which system includes a base station adapted for operation such that consequent upon receipt of data in the said reserved field, the base station is arranged to respond by allocating available slots to satisfy the requirement of the mobile unit.

One important advantage of this system, as will be appreciated by those skilled in the art, is that since only one access contention request is required irrespective of the number of information slots required, the access contention time required to reserve capacity will be minimised or at least substantially reduced as compared with a system in which each individual slot must be contended for. Although the system is an improvement over hitherto known arrangements, in that the access contention time is reduced in order to provide for transmission from the mobile in the slots allocated by the base station, there may be occasions when a dedicated substantially permanent allocation of capacity is also or alternatively required.

It is therefore an object of the present invention to provide a modified system wherein, although improved access contention is provided for in accordance with our co-pending patent application, it is still never the less additionally possible, when required, to provide for the dedicated substantially permanent allocation of communication capacity.

According to the present invention we provide a radio system which is arranged to operate in accordance with a packet reservation multiple access protocol, wherein at least one time slot in each frame is designated for the transmission of access contention data, which time slot includes a first field reserved for data specifying the number of information slots required by a sub-unit, and which system includes a base station adapted for operation such that consequent upon receipt of data in the said reserved field, the base station is arranged to respond by allocating available slots to satisfy the requirement of the sub-unit, characterised in that the said designated time slot is arranged additionally to include a further field reserved for a flag which when it is present, indicates to the base station that the sub-unit requires the substantially permanent allocation of the said information slots.

Thus by the simple expedient of the additional inclusion of a data bit or bits which represent the flag, the allocation of slots can be made on the assumption of substantial permanence rather than in accordance with the slot contention principle.

The radio system may be a cellular mobile radio system, wherein the sub-unit is a mobile unit and wherein the time slot which includes the first and further fields also includes a mobile unit address field.

The system may be arranged such that consequent upon the substantially permanent allocation of a slot or slots for information, further information slots may thereafter be additionally contended for.

One embodiment of the invention will now be described by way of example only with reference to the accompanying drawings, wherein,
FIGURE 1 is a block schematic circuit diagram which corresponds substantially to Figure 5 of our co-pending patent application as referred to above with the exception that a service class control flag has been included whereby implementation of the present invention is facilitated;
FIGURE 2 is a schematic diagram showing slots in both an up-link and a down-link transmission burst comprising two frames, and
FIGURE 3 is a schematic diagram of an Air-Interface Channel Identifier (ACI) burst.

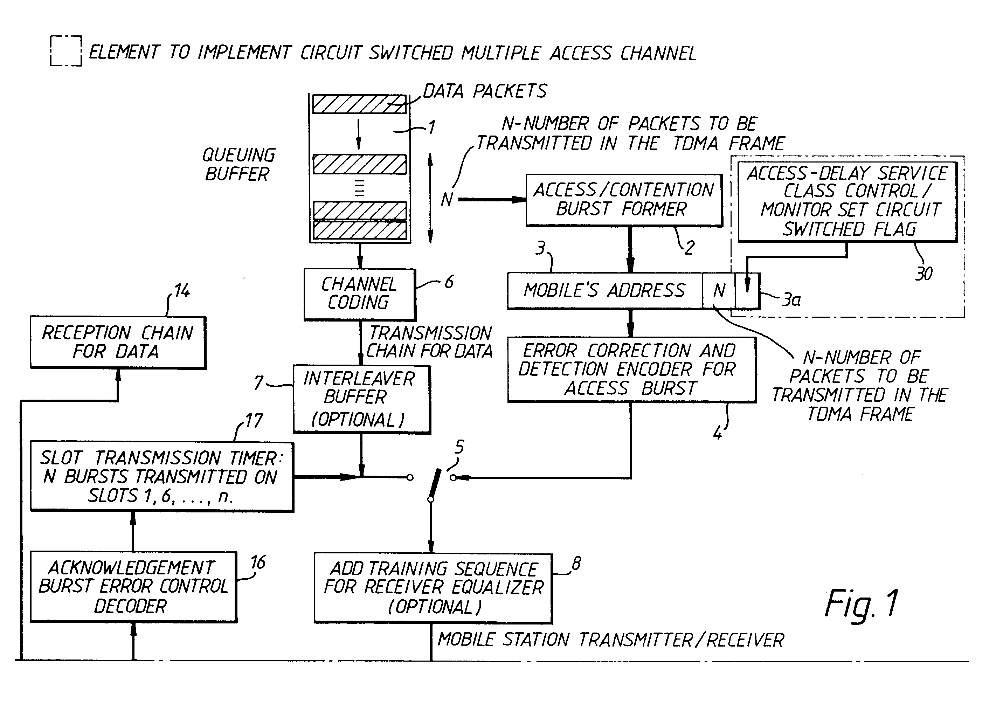

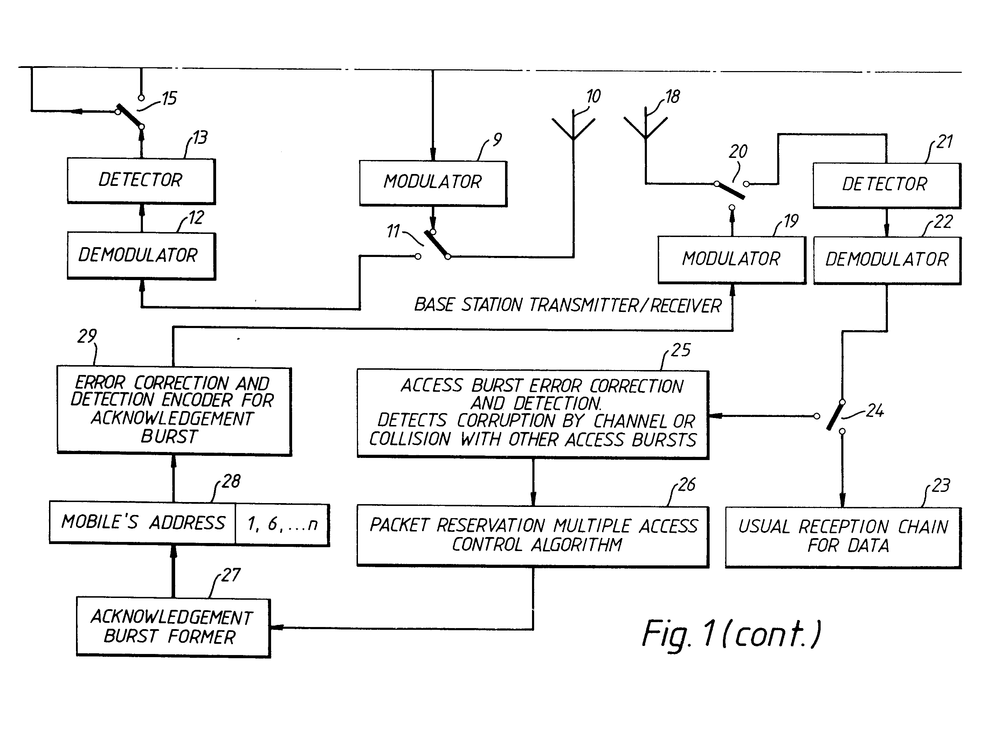

Referring now to FIGURE 1, one arrangement of a mobile and base station for putting the invention into effect will now be described.

Referring firstly to the mobile station, the transmitter comprises a queuing buffer store 1 in which data for transmission is accumulated. The contents of the buffer is sensed by an access contention burst former 2 which determines the number of packets of data to be transmitted in a TDMA frame. Data appertaining to this number, together with the address of the mobile is fed via an address module 3 to an error correction and detection encoder 4 to a switch 5. The switch 5 is also fed from the queuing buffer 1 via a channel coding unit 6 and an interleaver buffer 7. The switch 5 is arranged to feed a burst formatter 8 which adds a training sequence for the purpose of equalisation and a modulator 9 which in turn feeds an aerial 10 via a transmit/receive switch 11. It will be appreciated that the switch 5 is operated so that the interleaver buffer 7 is connected to the burst formatter 8 for the transmission of data during an appropriate time slot or so that the error correction and detection decoder 4 is connected to the burst formatter 8 for the transmission of access contention data appertaining to the number of packets of information to be transmitted. Received signals are fed via the switch 11 to a demodulator 12 which feeds the detector 13. The detector 13 either feeds a data reception chain 14 via a switch 15 or an acknowledgement burst error control decoder unit 16 and a slot transmission timer 17 which serve to identify available slots during which data packets in the queuing buffer 1 should be transmitted.

The base station comprises a transmit/receive aerial 18 fed for transmission purposes from a modulator 19. Signals received at the aerial 18 are fed via a detector 21 and a demodulator 22 to a data reception chain 23 via a switch 24. The switch 24 is arranged to feed the data reception chain 23 for data reception purposes or an access burst error correction and detection unit 25 when access- contention request data is received. The access burst error correction and detection unit 25 feeds a packet reservation multiple access control algorithm unit 26 which analyses each access contention request and serves to provide data appertaining to available time slots, which data is fed via an acknowledgement burst former 27 to an address unit 28 which serves to add the mobile's address to the data and an error correction and detection decoder 29 for the acknowledgement burst. The modulator 19 is fed conventionally with data during appropriate transmission slots and from the error correction and detection decoder 29 for the transmission of acknowledgement signals and data appertaining to slots in which a mobile should transmit.

Since a multiple access scheme should ideally support a variety of different services with different source characteristics and service requirements, the present system has been arranged to include a facility which allows a service to change its operational mode from an access contention reservation mode, as described in our co-pending patent application GB 9219824.1, to a circuit switched mode, i.e. to a mode in which substantially permanent allocation of the slot or slots is provided for.

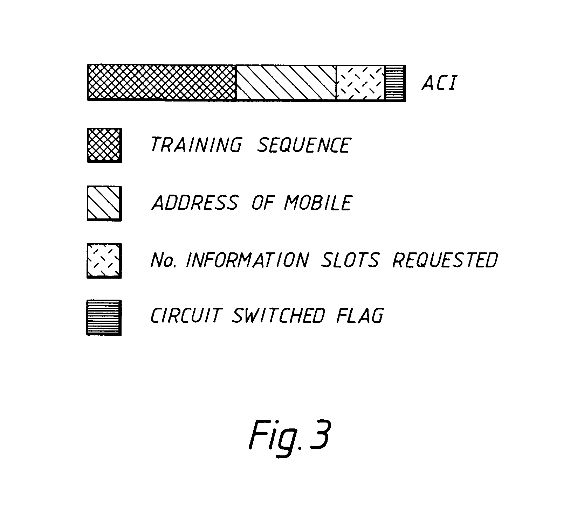

As shown in Figure 1, this is facilitated by means of an additional unit 30 which serves for service class selection and flag provision. Thus, when a circuit switched mode is required, the unit 30 is arranged to insert a flag 3a in the ACI burst, as shown in Figure 3, which identifies whether or not the capacity requested by a mobile unit (i.e. the number of slots required) is required on a permanent basis (i.e. circuit switched), even when no actual transmission activity occurs on a logical channel. Thus, this facility may be required either to guarantee a number of slots in a TDMA frame to a mobile unit for some given service such as signalling which has both high integrity and low delay requirements, or, under certain conditions when a mobile unit due to current traffic conditions must operate in a circuit switched mode rather than in an access contention reservation mode.

It will be appreciated that allowing a mobile to direct the selection of circuit switched mode, or access contention reservation mode, implies that the mobile should indicate when it wishes to relinquish the reserved capacity. A base station will have full knowledge of whether slots are assigned in the reservation mode or the circuit switched mode. Therefore, after a certain time during which a slot has been silent which was previously assigned on a reservation basis, the base station may be arranged to interrogate the mobile so as to afford a fail safe mode.

For the implementation of circuit switched mode operation, the service class selector and flag device 30 is used to measure the access delay experienced by a mobile and to weigh this against the delay tolerance of the service for which contention is being made. A decision is then made on the basis of this information, along with any other information which may have a bearing on whether or not to set the circuit switched mode flag. If appropriate, the circuit switched mode flag in the ACI as shown in Figure 3 is then set and the ACI transmitted in the R-slots of the up-link TDMA frame as described in our co-pending patent application referred to above.

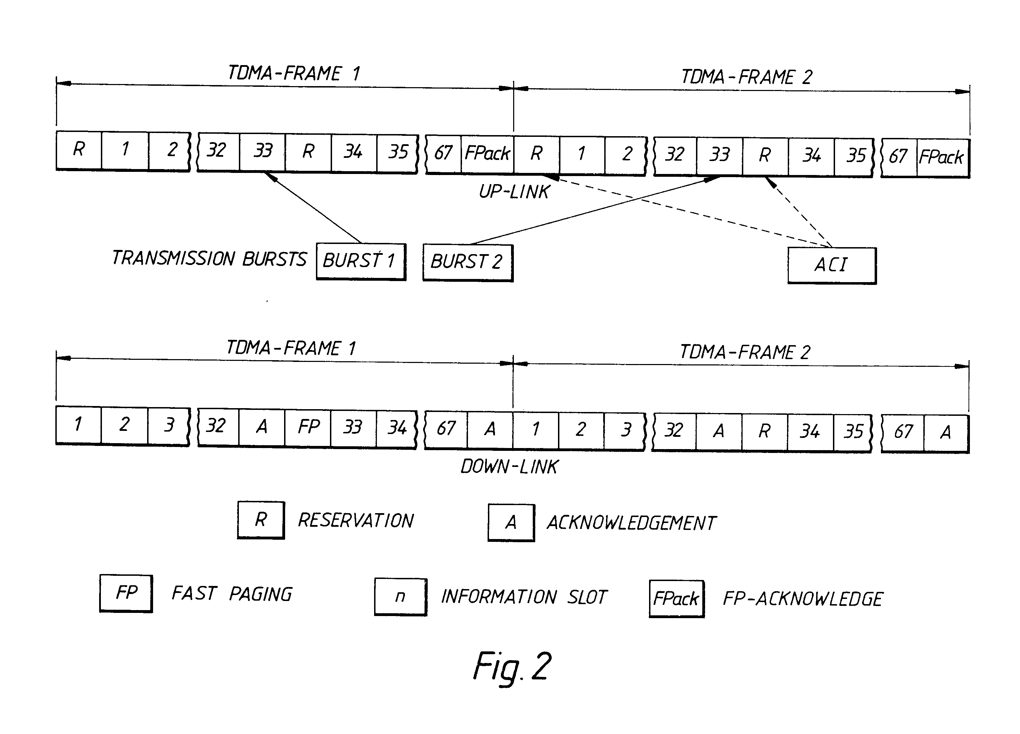

As shown in Figure 3, the ACI includes fields for a training sequence, a mobile's address, the number of information slots requested, and a circuit switched mode flag. With the exception of the training sequence, this is shown in block 3 of Figure 1. Up-link and down-link transmission bursts including slots for reservation, acknowledgement, fast paging, fast paging acknowledgement and information are shown in Figure 2. The significance of this information is fully described in the specification accompanying our co-pending application as referred to above, and/or in the specification of our co-pending GB Patent Application No 9312005.3 to which attention is hereby directed for a better understanding of the background to the present invention.

## Claims

1. A radio system which is arranged to operate in accordance with a packet reservation multiple access protocol, wherein at least one time slot in each frame is designated for the transmission of access contention data, which time slot includes a first field reserved for data specifying the number of information slots required by a sub-unit, and which system includes a base station adapted for operation such that consequent upon receipt of data in the said reserved field, the base station is arranged to respond by allocating available slots to satisfy the requirement of the sub-unit, characterised in that the said designated time slot is arranged additionally to include a further field reserved for a flag which when it is present, indicates to the base station that the sub-unit requires the substantially permanent allocation of the said information slots.

2. A system as claimed in claim 1, wherein the flag comprises an additional data bit or bits.

3. A system as claimed in claim 1 or claim 2, wherein the radio system is a cellular mobile radio system, wherein the sub-unit is a mobile unit and wherein the time slot which includes the first and further fields also includes a mobile unit address field.

4. A cellular mobile radio system as claimed in claim 3, wherein the system is arranged such that consequent upon the substantially permanent allocation of a slot or slots for information, further information slots are thereafter additionally contended for when required.

5. A cellular mobile radio system as claimed in claim 4, wherein after reservation of a slot on a substantially permanent basis and after the reserved slot has not been used for a predetermined period, the base station is arranged to interrogate the mobile to determine whether reservation is still required.
